# EUROPEAN PATENT SPECIFICATION

(11) **EP 0 503 428 B1**
(45) Date of publication and mention of the grant of the patent: **04.11.1998**
(21) Application number: 92103565.5
(22) Date of filing: 02.03.1992
(51) Int. Cl.: G11B 7/24

(54) **Optical recording medium and method for using the same**
Optisches Aufzeichnungsmedium und Verfahren unter Verwendung desselben
Support d'enregistrement optique et méthode l'utilisant

(30) Priority: 14.03.1991 JP 49544/91
(43) Date of publication of application: 16.09.1992
(73) Proprietor: MATSUSHITA ELECTRIC INDUSTRIAL CO., LTD., Kadoma-shi, Osaka-fu, 571 (JP)
(72) Inventor: Hashida, Takashi, Miyakojima-ku, Osaka City 534 (JP); Kishimoto, Yoshio, Hirakata City 573 (JP)
(74) Representative: Jung, Elisabeth, Dr.

(56) References cited:
- EP-A- 0 193 931
- EP-A- 0 248 176
- EP-A- 0 354 070
- WORLD PATENTS INDEX LATEST Week 0592, Derwent Publications Ltd., London, GB; AN 92-037754 (05)

## Description

### FIELD OF THE INVENTION AND RELATED ART STATEMENT

### 1. BACKGROUND OF THE INVENTION

The present invention relates to optical recording media capable of being rewritten, and methods for recording information, reading and erasing the recorded information on said recording media, and method for initializing said recording media.

### 2. PRIOR ART

In the past, a photochromic compoundwas known as a material which produces a reversible color change upon irradiation with two kinds of light emitted from two light sources whose wavelengths are different from each other. In the case of utilizing the photochromic compound as an optical recording material in the recording medium, it is general practice to record information by irradiating a recording layer including a colored isomer of said photochromic compound at an absorption wavelength of said colored isomer with a visible laser radiation. Thereby, the colored isomer is converted into its colorless isomer, and to erase the information by irradiating said recording layer with an ultraviolet laser radiation, thereby causing the colorless isomer to return to the colored isomer. The reading of the recorded information is performed by irradiating the recording layer with a visible laser of a light intensity weaker than that at the recording process, thereby detecting the absorption by said colored isomer.

Incidentally, according to the above-mentioned conventional method of recording information by irradiating the recording medium composed of the photochromic compound with a visible laser beam capable of being absorbed by the colored isomer of the photochromic compound, a large quantity of energy is required for the recording. The large energy consumption is attributable to the low efficiency of the photochromic reaction for converting the colored isomer into the colorless isomer. As a result of the large energy consumption, there has been a problem in respect of the requirement for a light source of a large energy output and an undesirably long recording period.

In addition to this, there exists another problem in that an increase in the recording density is difficult. Although there has been proposed a method for increasing the recording density of the rewritable optical recording medium, wherein a photochromic compound capable of forming a J-aggregate having a sharper absorption peak (spectrum range) than the photochromic compound itself in the recording layer is used, there has been only a small number of photochromic compounds which form stable J-aggregates available for configuring the optical recording medium, and thus it has been difficult to prepare a multi-frequency recording medium of a high multiplicity by employing such photochromic compounds.

Further, there has been a still other problem that the cyclic service-life for tlic repeated recording and erasing is not sufficiently long. The short service-life is attributable to the fact that the deterioration reaction of the photochromic compounds proceeds as a side reaction of the photochromic reaction at the time of the recording and erasing.

Moreover, there has been a still further problem that the recorded state of the recording medium may sometimes be destroyed by the reading operation itself (read-out destruction). This is attributable to the change in the recorded state by a weak light which should be irradiated for the reading. Even in an optical recording medium of postscript-type which employs an organic dye (coloring matter) which does not demonstrate a photochromic reaction, a denaturing of such dye compound proceeds little by little by being irradiated with a light at the time of the reading of recorded Information, and the recorded information of the recording medium is finally lost. In order to suppress the denaturing, a means has been proposed as disclosed in the Japanese Unexamined Patent Publication No. 159087 (Tokkaisho 60-159087), wherein a quencher is added to the recording medium composition for quenching any excited species formed by irradiation with the reading light and thus eliminating the cause of the deterioration.

### OBJECT AND SUMMARY OF THE INVENTION

It is therefore the primary object of the present invention to provide an optical recording medium which requires only small recording energy and to provide a novel method for recording, erasing or reading information using the newly provided optical recording medium.

The optical recording medium has a high recording density and further can undergo a multiplicity of repeated recordings and erasings of the recorded information.

According to the present invention there is provided an optical recording medium comprising at least one recording layer containing as essential material a composition which includes
at least one dye and
at least one photochromic compound,
which is characterized in that
said dye is a fluorescent material,
said photochromic compound is a photo-reactive bistable quencher for quenching the fluorescence emitted from said fluorescent material, and
the amount of said photo-reactive bistable quencher is in excess of the amount actually required for quenching said fluorescence.
The present invention is characterized by utilizing a very high light sensitivity of the combination of the Dye (fluorescent material) and the quencher, and intended to realize a reduction in the recording energy, an improvement in the recording density, and an improvement in the repetition stability in the recording and erasing process.

On the optical recording medium of the present invention, an information is digitally recorded by utilizing the two bistable isomers of the photochromic compound (photo-reactive bistable quencher). In the erased state, the absorption band of the photo-chromic compound is in its long wavelength side (being a colored isomer), while, in the recorded state, the absorption band is in its short wavelength side (being a colorless isomer).

Namely, the information is recorded by causing the dye to absorb the irradiated light and to transfer the absorbed energy to the photochromic compound, thereby causing the photochromic compound to participate in a photochromic reaction (colored isomer → colorless isomer) on this recording medium. Since the present invention utilized the fact that the combination of the dye and the photochromic compound has a very high light sensitivity, the recording energy is reduced accordingly, in the above-stated recording mode.

The reading of the recorded information is performed either by detecting the fluorescence emitted from the dye or by detecting the fluorescence emitted from the photochromic compound having a fluorescent activity. By this mode, the precision in the reading is much improved.

Further, the reading of the recorded information is performed by isomerizing (colorless isomer → colored isomer) only a small portion of the photochromic compound which is included in the recording layer in an excessive amount, thereby activating the photochromic compound to serve as a quencher. In this manner, only a small portion of the photochromic compound is caused to participate in the erasing of the recorded information, whereby the number of cyclic repetitions of recording/erasing is much improved.

In some of the optical recording media built in accordance with the present invention, plural dyes, each being capable of forming a J-aggregate and having an absorption wavelength different from that of the other, are used to form a plurality of multi-frequency recording layers laminated on one another. The obtained multi-frequency optical recording medium has an advantage in its high recording density.

The degree of deterioration in the recorded state of the recording layer of the optical recording medium at the time of the reading is sufficiently small.

Some of the optical recording media built in accordance with the present invention are characterized in that they comprise at least one recording layer containing as essential material a composition which included
at least a photochromic compound with fluorescent activity which is a first photochromic compound and takes either one of the two states of colorless isomer and of colored isomer, and
at least one photo-reactive bistable quencher, which is a second photochromic compound, and which takes either one of the two states of long wavelength isomer and of short length isomer and quenches the fluorescence emitted from said first photochromic compound.

The photo-reactive bistable quencher used in the present invention produces two isomers, one having an absorption band which is different from that of theother, and one being convertible into the other by an irradiation with a light. One of these bistable isomers acts as a quencher for quenching the fluorescence emitted by the first photochromic compound. Thus it is safely said that the photo-reactive bistable quencher is a particularly photochromic compound having a quenching activity.

The obtained optical recording medium has an advantage in the form of suppressed destruction of the recorded state at every reading step, thereby greatly increasing the number of repeated reading processes. The details thereof will be elucidated in the forthcoming description with reference to the preferred embodiment.

While the novel features of the invention are set fourth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

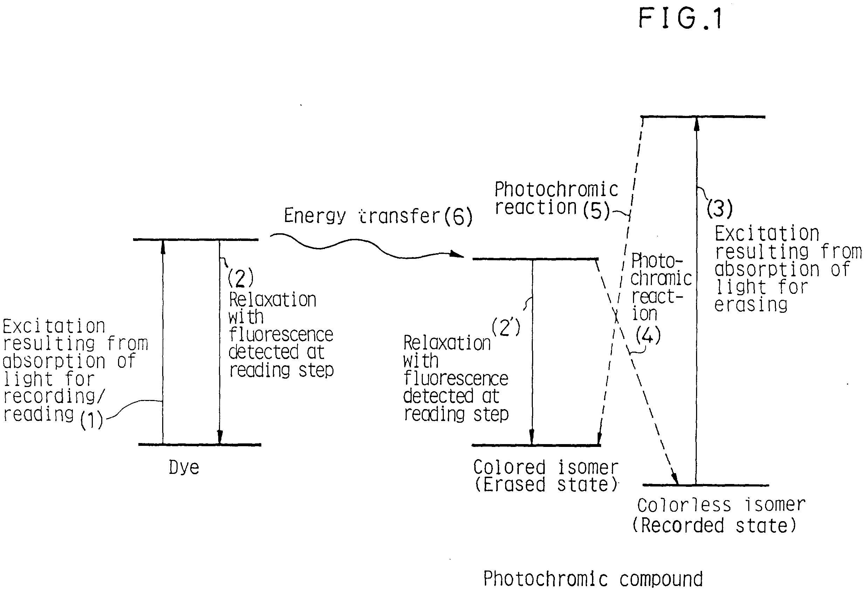

FIG. 1 is a schematic energy level diagram showing a mechanism of recording, erasing and reading information of the recording medium prepared in accordance with the present invention, comprising a recording layer composed of a composition which includes a dye (fluorescent material) and a photochromic compound (photo-reactive bistable quencher).

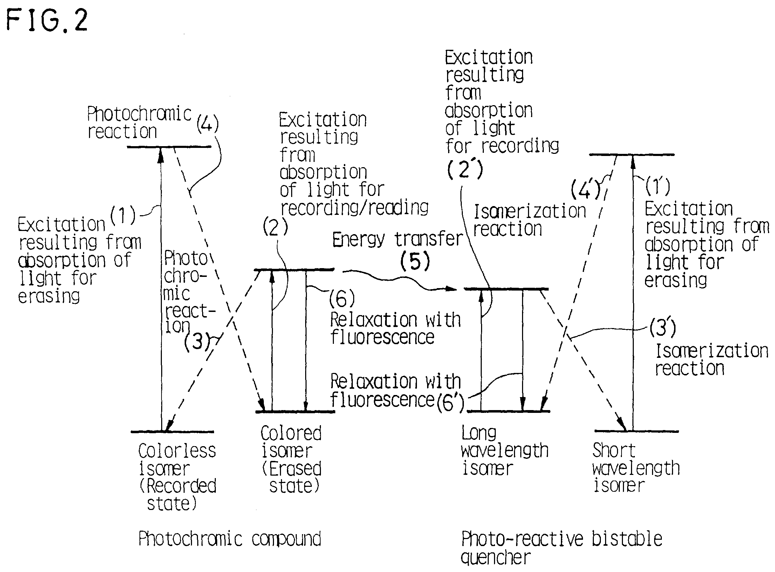

FIG. 2 is a schematic energy level diagram showing a mechanism of recording, erasing and reading information on the recording medium prepared in accordance with the present invention, comprising a recording layer composed of a composition including a photochromic compound (which is a first photochromic compound) and a photo-reactive bistable quencher (which is a second photochromic compound).

### DESCRIPTION OF THE PREFERRED EMBODIMENTS

### OPTICAL RECORDING MEDIUM COMPRISING A FLUORESCENT MATERIAL

A preferred embodiment of the optical recording medium comprising a recording layer composed essentially of a composition which includes a dye and a photo-chromic compound built in accordance with the present invention will now be elucidated with reference to FIG. 1. In FIG. 1, each of the three pairs of the top and bottom thick solid lines represents the excited state energy levels (top) and the ground state energy levels (bottom) of the dye and the photochromic compound , respectively.

The upward arrows from the ground states to the excited states represent excitations induced by an energy absorption at the time of being irradiated with lights, and the downward arrows from the excited state to the ' ground states represent relaxations at the time of emitting fluorescence. The waved arrow (indicated by (6) in FIG. 1) from the excited state of the dye to the excited state of the colored isomer of the photochromic compound represents an energy transfer from the dye to the photochromic compound.

Further, the broken line arrows crossing in a space between the colored isomer and the colorless isomer of the photochromic compound represent the corresponding isomerization reactions between the isomers. In the case of the erasing mode, the photochromic compound is in its colored isomer state and its absorption band overlaps with the fluorescence band of the dye. For this reason, the energy transfer from the dye to the quencher occurs efficiently, whereby the fluorescence emitted from the dye is quenched. Therefore, the erased state equals to a state wherein the photochromic compound is activated as a quencher.

On the contrary, in the recorded state, the quencher is in its colorless isomer state and has no absorption band in the vicinity of the fluorescence band of the dye. Therefore, no energy transfer from the dye to the photochromic compound occurs, and no quenching of the fluorescence emitted from the dye proceeds. As a result, the dye directly emits fluorescence. In this manner, the photochromic compound is in its colorless isomer state in the recorded state, and thus it is safely said that the quencher is in its deactivated state in that mode.

### <Recording Mode>

The recording of information is performed by irradiating the recording layer of the recording medium with a light beam including at least a component of wavelength in the region of the absorption band of the dye indicated by (1) in FIG. 1). At that time, the excitation energy of the dye which is to be activated and has absorbed the light beam is transferred to the photochromic compound (colored isomer) (indicated by (6) in FIG. 1).

By this energy transfer, the isomer of the photochromic compound which has been excited undergoes a reaction (isomerization reaction, indicated by (4) in FIG. 1) for converting itself from its colored isomer into its colorless isomer und loses its activity as a quencher.

From the foregoing it is clear that the present method of erasing information stored in or for initializing an optical recording medium comprising at least one recording layer containing as essential material a composition which includes
at least one dye and
at least one photochromic compound,
is characterized in that
said dye is a fluorescent material,
said photochromic compound is a photo-reactive bistable quencher for quenching the fluorescence emitted from said fluorescent material, and
the amount of said photo-reactive bistable quencher is in excess of the amount actually required for quenching said fluorescence
which method comprises:
irradiating said recording layer with a light at the wavelength in an absorption band of the colorless isomer of said photochromic compound, and thereby
converting a portion of said photochromic compound into its colored isomer.

### <Reading Mode>

The reading of the recorded information is performed by detecting the fluorescence (indicated by (2) in FIG. 1) emitted from the dye in response to the irradiation with a light beam of a weaker intensity (indicated by (1) in FIG.1) in the wavelength region capable of being absorbed by the dye,
whereby the reading with a preferable sensitivity is achieved. The reason for this achievement of good sensitivity is that: in addition to the fact that the detection by fluorescence is inherently excellent in its sensitivity, the isomerization of only one molecule of the photochromic compound may invite a change in the fluorescence by the large numbers of the molecules of the dye , and thus an amplification in the detection is realized.

In this reading mode, if the wavelength of the light beam irradiated for the reading (represented by (1) in FIG.1) is near the wavelength of the fluorescence band to be detected (represented by (2) in FIG.1), the effect of scattering for the reading unfavorably increases; and thus the precision in the reading may sometimes be decreased, inducing the increase of noises. In this case of the lowered precision, a fluorescent photochromic compound should be employed, and the fluorescence beam ((2') of FIG.1) emitted from the photochromic compound in response to the same light beam ((1) of FIG.1) for the reading should be detected.

In this manner, the wavelength difference between the reading light beam and the fluorescence beam becomes large, and the noise attributable to the scattering of the reading light beam decreases, whereby a favorable reading process is achievable. The effect of this reading mode becomes remarkable in particular at the time where the dye forms a J-aggregate, and the wavelength difference between its absorption band and its fluorescence band (Stokes shift) becomes small as compared with the normal difference.

In the reading method according to the present invention wherein the fluorescence emitted from the dye (represented by (2) in FIG.1) is detected for the reading of the recorded information, the intensity of the fluorescence is high at the recorded spot and is low at the non-recorded (or erased) spot. On the other hand, in the case of detecting the fluorescence emitted from the photochromic compound having a fluorescent activity (represented by (2') in FIG. 1), the intensity of the fluorescence is high at the non-recorded (or erased) spot. This is attributable to the fact that the photochromic compound at the non-recorded spot is in its colored isomer state, whereby the fluorescence of the dye ((2) of FIG. 1) is quenched by the transfer of the excitation energy ((6) of FIG. 1) but another fluorescence ((2') of FIG.1) is emitted from the photochromic compound.

On the other hand, since the photochromic compound is in its colorless isomer state at the recorded spot, no energy transfer occurs and the dye directly emits the fluorescence (represented by (2) in FIG. 1), whereby the intensity of the fluorescence of the photochromic compound is weakened, accordingly.

### <Multi-frequency Optical Recording Medium>

In order to perform a recording operation in a higher density, another embodiment of the optical recording medium is configured. This recording medium comprises; a plurality of laminated recording layers, each composed essentially of a composition including a dye having a sharp absorption and a photochromic compound, wherein absorption wavelengths of the dyes in the respective recording layers are different from one another. By irradiating the recording medium with lights of the different wavelengths which can selectively be absorbed by each of the dyes, a multiple-recording is made possible.

### OPTICAL RECORDING MEDIUM COMPRISING A FLUORESCENT MATERIAL WHICH FORMS A J-AGGREGATE

By employing a J-aggregated dye having an absorption band of a narrow half-value width and thus causing the recording medium to absorb the lights for every layer, it has been made possible to perform a multiple-recording having a higher wavelength selectivity. In the case of the present invention wherein the recording wavelength is determined by the absorption band of the dye, the photochromic compound needs not form the J-aggregate as opposed to the conventional embodiment disclosed in the United State Patent No. 4,737,427. Thus, the multi-frequency recording becomes possible by employing a photochromic compound which does not form a J-aggregate;
whereby the provision of a rewritable high density optical recording medium is made easy.

The utilization of the dye capable of forming a J-aggregate in the recording layer composition has thus another advantage in reducing the energy required for the recording, because the efficiency in the energy transfer in the J-aggregate is high. The recording/reading can be performed in the afore-mentioned manner.

### OPTICAL RECORDING MEDIUM COMPRISING THE PHOTOCHROMIC COMPOUND IN EXCESSIVE AMOUNT

The recording layer used in the present invention is configured to include a photochromic compound in a quantity exceeding the amount actually required for quenching the fluorescence emitted from the dye.

In this case, instead of activating a major portion of the whole photochromic compound by irradiating with a large quantity of the ultraviolet radiation in the erasing step, only a minute portion of the photochromic compound may be converted ((5) of FIG.1) into its colored isomer by irradiating it with a small quantity of the ultraviolet radiation ((3) of FIG. 1) (In FIG.1, the arrow (5) indicates a photochromic reaction for activating as the quencher).

Actually, since the fluorescence emitted from the dye can be quenched by a minute amount of the quencher, it is sufficient to activate only a small portion of the photoreactive compound as the quencher for quenching. By preliminarily including an excess amount of the photochromic compound in the recording medium as the quencher, even when the deterioration had proceeded in a portion to the photo-chromic compound the remaining portion of the photochromic compound (which had not been deteriorated) acts as the quencher. In this manner, the number of cyclic repetitions of the recording/erasing can be increased. Further, as mentioned above, since the activation of only a minute quantity of the total amount of the photochromic compound included in the recording medium is sufficient for the erasing step, this manner of erasing is also effective for the reduction of the energy to be consumed for the erasing (ultraviolet radiation energy: indicated by (3) in FIG. 1). The recording and reading of the information can be performed in the already disclosed manner.

### OPTICAL RECORDING MEDIUM COMPRISING A PHOTOCHROMIC COMPOUND

In the following paragraphs, description will be made on the configuration of another embodiment of an optical recording medium proposed for solving the problem consisting in that the recorded state of the recording layer may be destroyed at the time of the reading of the recorded information. The recording medium of this configuration employs a first photochromic compound having fluorescent activity which takes either of the two states of colorless isomer and of colored isomer and a photo-reactive bistable quencher, which takes either one of the two states of long wave length isomer and of short wavelength isomer. A digital recording is performed by utilizing two bistable isomers (colored isomer and colorless isomer) of the photochromic compound (which is the first photochromic compound.

The photochromic compound which is the first photochromic compound in its colored isomer state corresponds to the erased state of the recording layer, while that in its colorless isomer state corresponds to the recorded state of the recording layer.

On the other hand, the photo-reactive bistable quencher which is the second photochromic compound included in the recording layer plays a role of adjusting the presence/absence of the quenching activity thus controls the photochromic reaction (a reaction corresponding to the recording process indicated by (3) in FIG.2) of the photochromic compound which is the first photochromic compound. Any quencher in the conventional postscript-type optical recording media holds a constant quenching activity In contrast thereto, the quencher of the present invention prevents the destruction of the recorded information by suppressing the photochromic reaction (a reaction corresponding to, or for the recording process indicated by (3) in FIG. 2) by the quenching activity demonstrated only in the reading-out mode; while in the recording mode the quencher does not demonstrate the quenching activity and causes the photochromic reaction (the reaction corresponding to the recording process indicated by (3) in FIG. 2) to proceed.

Hereinafter, a preferred embodiment of the optical recording medium comprising a recording layer composed essentially of a composition, which includes a fluorescent photochromic compound having a fluorescent activity (which is the first photochromic compound) and a photo-reactive bistable quencher (which is a second photochromic compound) built in accordance with the present invention, will be elucidated with reference to FIG. 2. In FIG. 2, each of the four pairs of the top and bottom thick solid lines represents the excited state energy levels (top) and the ground state energy levels (bottom) of the photochromic compound (which is the first photochromic compound) and the photo-reactive bistable quencher,(which is the second photochromic compound) respectively.

The upward arrows ((1), (2), (1') and (2') of FIG. 2) from the ground states to the excited states represent excitations resulting from the absorptions of the irradiated lights. The waved arrow ((5) of FIG. 2) from the excited state of the photochromic compound (which is the first photochromic compound) to the excited state of the long wavelength isomer of the photoreactive bistable quencher (which is the second photochromic compound) represents the corresponding energy transfer. The downward arrows ((6), (6') of FIG. 2) from the excited states to the ground states represent the corresponding relaxation with fluorescence.

Further, the broken line arrows ((3) and (4) of FIG. 2) crossing at a space between the colored isomer and the colorless isomer of the photochromic compound (which is the first photochromic compound) represent the corresponding photochromic reaction between the isomers. In the same manner, the broken line arrows (indicated by (3') and (4') in FIG. 2) crossing at a space between the two isomers of the photo-reactive bistable quencher (which is the second photochromic compound) represent the corresponding isomerization reactions between the isomers.

It is preferable for the recording medium of the present invention that there is no energy transfer except the illustrated one (5) of FIG.2. Therefore, the overlap between the fluorescent band and the corresponding absorption band should be small. In order to fulfill this requirement, it is sufficient to select any overlap between any of the fluorescence band and any of the absorption band to be small; the only exception being the large wavelength overlap between the absorption band of the long wavelength isomer of the photo-reactive bistable quencher (which is the second photochromic compound) and the fluorescence band of the colored isomer of the photochromic compound (which is the first photochromic compound).

In the following paragraphs, concrete methods for erasing, recording and reading information on this embodiment of recording medium of the present invention will be elucidated.

### <Erasing/Initializing Mode>

At the erasing or initializing step, the photo-reactive bistable quencher (which is the second photochromic compound) is activated as a quencher first by irradiating it with a light ((1') in FIG. 2) to cause the quencher to participate in an isomerization reaction ((4') in FIG. 2) and to convert the quencher into its long wavelength isomer. Thereafter, the erasing or initializing operation of the recording medium is performed by irradiating the photochromic compound (which is the first photochromic compound) with a light (indicated by (1) in FIG. 2) for converting the compound into the colored isomer (indicated by (4) in FIG. 2).

It is to be noted here that conversion of the photochromic compound (which is the first photochromic compound) into the colored isomer is made not to the last molecule of the whole first photochromic compound, but only to such extent as to produce a mixture of the colored isomer and colorless isomer during the ultraviolet irradiation (indicated by (1) in FIG. 2). The reason for this is that: another photochromic reaction (indicated by (3) in FIG. 2) also takes place wherein the colored isomer which had been formed from the colorless isomer by the ultraviolet irradiation returns to the colorless isomer by absorbing the same ultraviolet radiation. And the proportion of the colored and colorless isomers formed in the photochromic compound (which is the first photochromic compound) is determined by the rates of these two reactions.

If the erasing method in accordance with the present invention is employed, owing to the activation of the photo-reactive bistable quencher (which is the second photochromic compound) by the light irradiation ((1') of FIG. 2) the energy transfer ((5) of FIG. 2) from the excited state of the colored isomer to the photo-reactive bistable quencher proceeds. And the excited state of the colored isomer is quenched, thereby effectively suppressing the photochromic reaction (indicated by (3) in FIG. 2) attributable to the excited state of the colored isomer.

Therefore, in the above-mentioned situation, the photochromic reaction leading to the colored isomer (indicated by (4) in FIG. 2) becomes overwhelmingly predominant, between both the photochromic reactions induced by the ultraviolet irradiation (indicated by (1) in FIG. 2). As a result, the density of the colored isomer formed at the erasing step increases, and the absorption of the non-recorded spot increases, whereby the difference in the amounts of the transmitted lights through the recording layer is increased between the recorded spot and the non-recorded spot, accordingly. This brings a favorable precision to the process in the reading mode.

### <Recording Mode>

In the recording operation, the photo-reactive bistable quencher (which is the second photochromic compound) is first irradiated with a light ((2') of FIG. 2) to deactivate it as a quencher, by causing it to participate in the isomerization reaction (indicated by (3') in FIG. 2) for converting itself into its short wavelength isomer. The recording operation is achieved by thereafter irradiating the first photochromic compound with a visible light (indicated by (2) in FIG. 2) to cause it to participate in the photochromic reaction (indicated by (3) in FIG.2) for converting itself into its colorless isomer. At this time, the photo-reactive bistable quencher (which is the second photochromic compound) is in its deactivated state, and hence the energy transfer (indicated by (5) in FIG. 2) from the excited state of the colored isomer to the photo-reactive bistable quencher does not proceeds, and no quenching takes place. As a result, the photochromic reaction (indicated by (3) in FIG. 2) from the excited state of the colored isomer is not suppressed but proceeds efficiently for the recording.

### <Reading Mode>

In the reading operation, the first photochromic compound is irradiated with a visible light (indicated by (2) in FIG. 2), and the recorded information is read by detecting the light transmitted through the first photochromic compound. Incidentally, reading in general is an operation of reading-out the difference in the light intensities between the recorded spot and the non-recorded spot. The unsolved problem of the destruction of the recorded information is due to the fact that an undesirable recording is made on the non-recorded spot by irradiation on it with a light for the reading, whereby the discrimination between the recorded spot and the non-recorded spot is made impossible.

In the reading operation in accordance with the present invention, the photo-reactive bistable quencher (i.e. the second photochromic compound) has previously been activated as a quencher at the non-recorded spot by the light irradiation at the initialization step (indicated by (1') in FIG. 2). Therefore the energy transfer (indicated by (5) in FIG. 2) from the excited state of the colored isomer produced by the light irradiation for the reading step (indicated by (2) in FIG. 2) to the photo-reactive bistable quencher (which is the second photochromic compound) proceeds, whereby the excited state of the colored isomer is quenched.

Therefore, any photochromic reaction (indicated by (3) in FIG. 2) corresponding to the recording process by the light irradiation (indicated by (2) in FIG. 2) does not proceed, so that a deterioration at the reading step, i.e., the destruction of the recorded information at the reading step (the recording on the non-recorded spot by the light for reading), does not take place.

Further, at the recorded spot, the isomerization reaction (indicated by (3') in FIG. 2) takes place in the photo-reactive bistable quencher (which is the second photochromic compound) to convert it into its short wavelength isomer by the light irradiation (indicated by (2') in FIG. 2) at the recording step, whereby the quencher (i.e. the second photochromic compound) is deactivated as a quencher. For this reason, the energy transfer (indicated by (5) in FIG. 2) from the excited state of the colored isomer produced by the light irradiation (indicated by (2) in FIG. 2) for the reading step to the photo-reactive bistable quencher (i.e. the second photochromic compound) does not proceed.

Therefore, the photochromic reaction (indicated by (3) in FIG. 2) corresponding to the recording process proceeds little by little. The proceeding of the reaction corresponding to the recording process however means that the difference between the recorded spot and the non-recorded spot becomes large. And this results in the favorable effect that the discrimination between the recorded spot and the non-recorded spot becomes easier with the increase in the number of the repetition of the reading, whereby another preferable advantage in the increased reliability is realized in the reading step.

From the foregoing explanations it will be understood that this method of the invention for erasing and recording information on an optical recording medium is characterized in that it comprises at least one recording layer containing as essential material a composition which includes
at least a first photochromic compound with fluorescent activity and which takes either one of the two states of colorless isomer and of colored isomer, and
at least one photo-reactive bistable quencher, which is a second photochromic compound, which takes either one of the two states of long wavelength isomer and of short wavelength isomer and quenches the fluorescence emitted from said first photo-chromic compound,
said photo-reactive bistable quencher being a control agent for controlling the photochromic reactivity of said first photochromic compound,
which method comprises the following steps:
an initial step for initialization of said optical recording medium by irradiating said recording medium with a light at the wavelength in an absorption band of the short wavelength isomer of said photo-reactive bistable quencher included in said recording layer thereby converting said photo-reactive bistable quencher into its long wavelength isomer and activating it as a quencher, and then
irradiating said recording layer with a light at the wavelength in an absorption band of said colorless isomer of said first photochromic compound included in said recording layer thereby converting said colorless isomer of said first photo-chromic compound into its colored isomer,
a recording step for recording information on said optical recording medium by irradiating with a light at the wavelength in an absorption band of the long wavelength isomer of said photo-reactive bistable quencher thereby inactivating it as a quencher by converting said photo-reactive bistable quencher into is short wavelength isomer, and then
irradiating said recording layer with a light at the wavelength in an absorption band of the colored isomer of said first photochromic compound thereby converting said first photochromic compound into its colorless isomer, and
an erasing step for erasing said recorded information by irradiating said recording medium with a light at the wavelength in an absorption band of the short wavelength isomer of said photo-reactive bistable quencher included in said recording layer thereby converting said photo-reactive bistable quencher into its long wavelength isomer and activating it as a quencher, and then irradiating said recording layer with a light at the wavelength in an absorption band of said colorless isomer of said first photochromic compound included in said recording layer thereby converting said colorless isomer of said first photochromic compound into its colored isomer.

### <Materials for the Invention>

The dye which can be employed for embodying the present invention is exemplified by cyanines and merocyanines, but the present invention should not of course be limited only to the use of these two kinds of the dyes (coloring matters). The other dyes such as squaryliums and pyriliums may also be employed for embodying the present invention.

The photo-reactive bistable quencher may be exemplified by compounds such as thioindigos, azobenzenes, stilbenes, viologens, azines, dithizones, formazanes and salicylideneanilines in addition to the spiropylanes and fulgides.

The photochromic compound may be exemplified by compounds such as thioindigos, azobenzens, stilbenes, viologens, azines, dithizones, formazanes and salicylidene anilines in addition to the spiropylanes and fulgides.

In the following Working Examples, the dyes of the following formulae I and II were used: 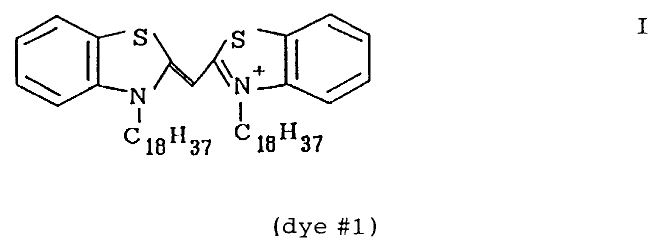 and

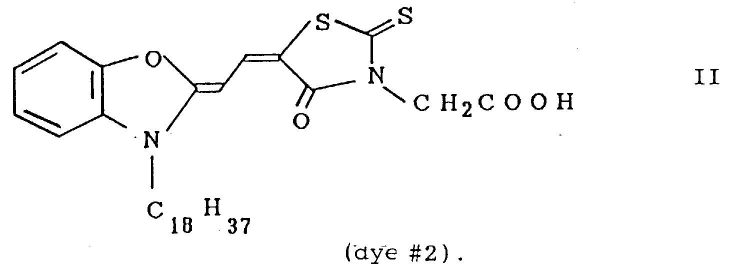

As photochromic compounds those of the following structural formulae may be employed: 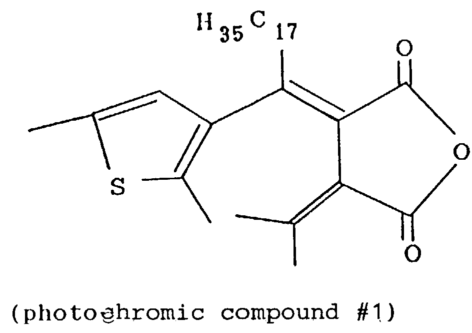 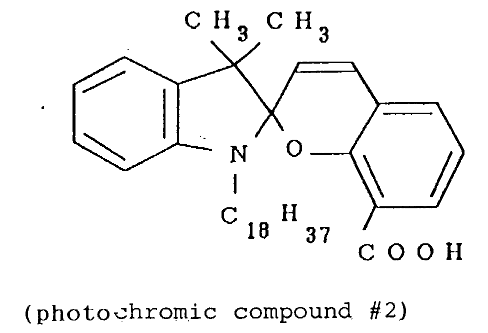 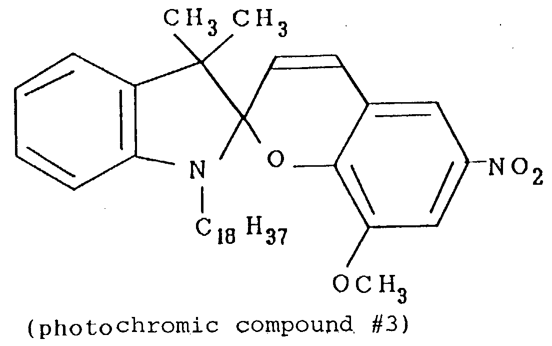 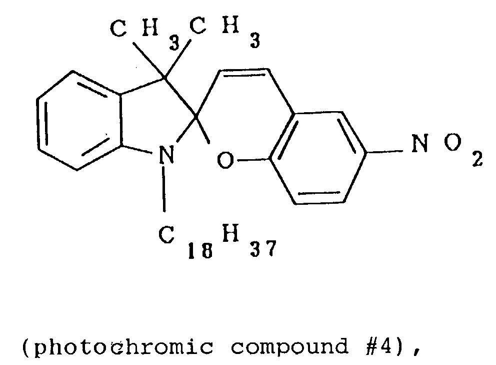 and

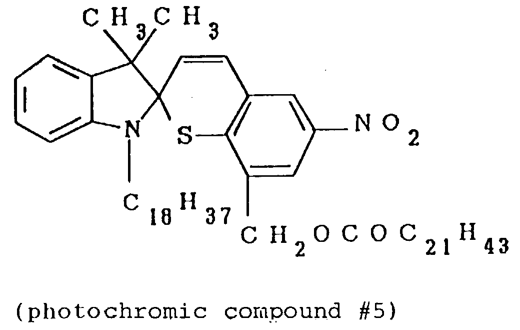

Although quartz and polycarbonate resins were employed in the following Working Examples as the substrate, any of the high molecular weight substance such as acrylic resins and polyolefine resins as well as any of the inorganic substance such as glasses, various metals and CaF₂ may also be employed for embodying the present invention.

Further, although a wet method such as a Langumuir Blodgett method (hereinafter, to be referred to simply as LB method) or a spin coating method was employed in forming a recording layer on the substrate in the embodiments, any other film-forming method such as vapor deposition may also be employed. In order to make the formation of a single molecular film in accordance with the LB method (hereinafter, to be referred to as LB film) easy, the compounds having (a) long hydrocarbon chain(s) was(were) utilized. Any of other compounds having no long hydrocarbon chain can however be utilized also for embodying the present invention, if such other film-forming methods are employed.

In Working Example 1, the advantage of the present invention in improving the number of cyclic repetition of recording/erasing is investigated by employing an excess amount of the photochromic compound

in the composition which includes a dye and a photochromic compound.

In Working Example 2, another advantage of the present invention in improving the durability for the repeated reading is investigated by employing a recording medium comprising a recording layer composed essentially of a composition which includes a first photochromic compound and a photo-reactive bistable quencher (which is the second photochromic compound).

### WORKING EXAMPLE 1

In this Working Example, the effect of the claimed measure on the stability (number of possible repetition of the recording and erasing) was examined on an optical recording medium. The optical recording medium was prepared by incorporating an excess amount of the photochromic compound over the amount actually required for quenching the fluorescence emitted by the dye (wherein the recorded information is erased by converting a minute portion of the photochromic compound into its colored isomer at the erasing step). The above-exemplified dye #2 and photochromic compound #4 were employed in this Working Example.

A solution prepared by dissolving 0.5 m mol of the dye #2 and 1.5 m mol of hexadecane in chloroform and another solution prepared by dissolving 0.5 m mol of the photochromic compound #4 and 1.5 m mol of stearic acid in chloroform were used to form the optical recording layer. In the forming of the optical recording layer, a single molecular film containing the dye #2 was first formed on a quartz plate substrate and another single molecular film containing the photochromic compound #4 was laminated on the first-mentioned film in accordance with the LB method. In the recording medium thus formed, the dye #2 formed a J-aggregate, whose absorption maximum was in the wavelength: 540 nm and whose fluorescence maximum was in the wavelength: 560 nm. The photochromic compound #4 was in its colorless isomer state and being inactive as a quencher in the recording medium as prepared.

The initialization was performed by irradiating the recording medium with a laser beam (wavelength: 351 nm; output: 0.3 mJ), thereby converting a portion of the photochromic compound #4 into its colored isomer (the activated state as a quencher). Next, the recording of the information was performed by irradiating the initialized recording medium with a laser beam (wavelength: 540 nm, which is in the absorption maximum wavelength: energy output: 90 mJ/cm²). The recording energy was set in a manner such that the fluorescence intensity at 560 nm was to vary by 20 %.

The erasing of the recorded information was achieved by irradiating the recording medium with a laser beam at 351 nm. The condition of the erasing was set in a manner such that the fluorescence intensity was to decrease by 20 % at this step. Further, it was confirmed that the change in the fluorescent intensity at the recording/erasing was able to be kept at 20%, which was the same value as that initially set, even after 200 repetitions of the recording and erasing operations had been performed.

Thus as above-mentioned, a recording medium containing an excess amount of the photochromic compound is employed, so that the proportion of the photo-reactive bistable quencher, which is activated at the time of the erasing operation against the total amount, is decreased. Thereby, the amount of actual deterioration at each recording/erasing cycle is decreased, and thereby the recording/erasing cycle life characteristics of the recording medium was improved. Simultaneously with this improvement, the energy required for the erasing operation could also be reduced.

For comparison, the effect of another recording medium on the recording as regards erasing repetition was also investigated by changing a major portion of the photo-chromic compound to its colored isomer, thus activating it as a quencher at the erasing step. The initialization (erasing) was performed on the same recording medium as that of Working Example 1 by irradiating it with an ultraviolet laser (wavelength: 351 nm; energy output: 50 mJ/cm²). The recording of the information was performed by irradiating the initialized recording medium with a laser beam (wavelength: 540 nm, which is in the absorption maximum of the dye: energy output: 250 mJ/cm²). The recording energy was determined in a manner that the fluorescence intensity at 560 nm was to vary by 20 % at the recording step. And it was confirmed that the change in the fluorescent intensity at the recording/erasing of this comparison sample decreased to a value under 20% (which is the same value as the initially set state), already after 20 repetitions in the course of repetitions of 50 recording/erasings, and further repetition of the recording and erasing was found to be difficult.

### WORKING EXAMPLE 2

In this Working Example, in order to investigate the effect of such combination on the repeated reading, a repeated reading experiment was performed on an optical recording medium, which comprises a recording layer composed essentially of a composition which includes a first photochromic compound with a fluorescent activity and a photo-reactive bistable quencher, which is a second photochromic compound. The above-exemplified photochromic compound #1 having a fluorescent activity (which is the first photo-chromic compound) and photochromic compound #5 (second compound) acting as photo-reactive bistable quencher were employed in this Working example. Both the colorless isomer of the photochromic compound #1 and the long wavelength isomer of the photochromic compound #5 are compounds which emit only scarce fluorescence. The employed photochromic compound #1 is available from the Nihon Kanko Shikiso K.K., Japan, and the photochromic compound #5 is synthesized in accordance with the method disclosed in Japanese Patent Application (Tokuganhei) 2-273,939. A chloroform solution containing the photochromic compound #1, the photo-chromic compound #5 and poly-dioctadecyl-dimethylammonium styrenesulfonate as a polymeric substance for carrying these compounds, in a ratio by weight of 1 : 0.2 : 20, was prepared and the obtained solution was used to form a recording layer on a quartz plate substrate by spin coating to obtain a recording medium. In the obtained recording medium, the photochromic compound #1 was in its colorless isomer state, which corresponds to the recorded state. Further, the photochromic compound #5 was in its short wavelength isomer, which was in an inactivated state as a quencher.

Since an initialization of the recording layer was required to be performed before recording, the following erasing operation was first performed on the prepared recording medium. The erasing was performed by irradiating the recording medium with a laser beam (wavelength: 380 nm; energy output: 20 mJ), whereby converting the photochromic compound #5 (acting as a quencher) into its long wavelength isomer and then by irradiating the recording medium with an ultraviolet laser beam (wavelength: 340 nm, energy output: 10 mJ), thereby converting the photochromic compound #1 into its colored isomer.

Next, the recording of the information was performed, by irradiating the erased recording medium with a visible laser beam (wavelength: 680 nm; energy output: 800 mJ/cm²), thereby converting the photo-reactive bistable quencher into its short wavelength isomer, and then by irradiating the erased recording medium with a visible laser beam (wavelength: 540 nm; energy output: 240 mJ/cm²). Thereby the photochromic compound #1 is converted into its colorless isomer. The recording energy was controlled in a manner that the variation of lights transmitted through the recording layer between the recorded spot and the non-recorded spot was to be 10 % of the total light transmitted through the recording layer at the non-recorded spots. The recorded information was read by irradiating the recording medium with a visible laser beam (wavelength: 540 nm; energy output: 1 mJ) and by detecting the transmitted light. The readings of 430 repetitions were possible until such a state was reached that the light transmitted through the non-recorded spot became indiscernible from that through the recorded spot.

As a first Comparison Example, another initialization was performed on the same recording medium as that of Working Example 2 by using the conventional erasing method. The erased state was effected in the recording medium by irradiating it with an ultraviolet laser beam (wavelength: 340 nm; energy output: 10 mJ/cm²), thereby converting the first photochromic compound into its colored isomer. In this process, the density of the colored isomer produced during the erasing operation was reduced by 10 % as compared with an embodiment, where the photo-reactive bistable quencher #5 was activated by irradiating it with the ultraviolet laser of 380 nm as in Working Example 2. As a result, after being recorded with the same method as that of Working Example 2, the difference detected for reading the recorded information in the transmitted light between the recorded spot and the non-recorded spot was decreased, accordingly. And thus a reduction in the SN ratio at the reading step and a decrease in the reading accuracy was observed.

As a second Comparison Example, another experiment was performed, wherein information was recorded on the recording medium, which had been produced and initialized by the same erasing method as that of Working Example 2, in accordance with the conventional recording method. Next, the first photochromic compound contained in the recording layer was converted into its colorless isomer by irradiating the recording medium with a visible laser beam (wavelength: 540 nm, energy output: 240 mJ/cm²). However, the difference in the transmitted light between the recorded spot and the non-recorded spot detected at the reading step was too small to be recognized as a recorded state. This is attributable to the fact that, since the photochromic compound #5 (acting as a quencher) is in its long wavelength isomer state, the energy transfer from the photochromic compound #1 to the second photochromic compound #5 proceeded, and thus the photochromic reaction for converting the colored isomer of the photochromic compound #1 into its colorless isomer did not proceed sufficiently.

As a third Comparison Example, a reading in accordance with the conventional reading method was performed on a recording medium which did not include the photochromic compound #5 (acting as a quencher) and had been initialized and recorded in accordance with the conventional erasing and recording methods.

A chloroform solution containing the above-exemplified photochromic compound #1 and poly-dioctadecyldimethylammonium styrenesulfonate in a ratio by weight of 1 : 20 was prepared, and the obtained solution was used to form a recording layer on a quartz plate substrate by spin coating to obtain a recording medium. An erasing step was performed by irradiating the recording medium with a laser beam of 340 nm, thereby converting the photochromic compound #1 from its colorless isomer into its colored isomer.

Next the recording of the information on the Comparison Example was performed by irradiating the erased recording medium with a visible laser beam (wavelength: 540 nm, energy output: 240 mJ/cm²), thereby converting the photochromic compound into its colorless isomer. The recorded information was read by irradiating the recording medium with a visible laser beam (wavelength: 540 nm, energy output: 1 mJ) and by detecting the transmitted light. The readings of 205 repetitions were possible until such state was reached that the light transmitted through the non-recorded spot became indiscernible with that transmitted through the recorded spot. As above-mentioned, the destruction of the recorded state at the reading step (read-out destruction) proceeded as compared with Working Example 2, and the possible reading repetitions were decreased.

As previously described, according to the Working Example 2 a recording with favorable sensitivity is made possible by using a recording medium comprising a recording layer composed essentially of the composition which includes a photochromic compound and a photo-reactive bistable quencher. This can be realized by performing a recording after inactivating the photo-reactive bistable quencher and by performing a reading after activating the photo-reactive bistable quencher. And thus the reading repetitions were increased by reducing the destruction of the recorded information at the reading step. Further, by erasing the recorded information after activating the photo-reactive bistable quencher and thus by raising the density of the colored isomer in the photochromic compound, a reading of a high precision was made possible.

## Claims

1. An optical recording medium comprising at least one recording layer containing as essential material a composition which includes
at least one dye and
at least one photochromic compound,
characterized in that
said dye is a fluorescent material,
said photochromic compound is a photo-reactive bistable quencher for quenching the fluorescence emitted from said fluorescent material, and
the amount of said photo-reactive bistable quencher is in excess of the amount actually required for quenching said fluorescence.

2. A method of erasing information stored in or for initializing an optical recording medium comprising at least one recording layer containing as essential material a composition which includes
at least one dye and
at least one photochromic compound,
characterized in that
said dye is a fluorescent material,
said photochromic compound is a photo-reactive bistable quencher for quenching the fluorescence emitted from said fluorescent material, and
the amount of said photo-reactive bistable quencher is in excess of the amount actually required for quenching said fluorescence,
which method comprises:
irradiating said recording layer with a light at the wavelength in an absorption band of the colorless isomer of said photochromic compound, and thereby
converting a portion of said photochromic compound into its colored isomer.

3. An optical recording medium, characterized in that it comprises at least one recording layer containing as essential material a composition which includes
at least a photochromic compound with fluorescent activity which is a first photochromic compound and takes either one of the two states of colorless isomer and of colored isomer, and
at least one photo-reactive bistable quencher, which is a second photochromic compound, and which takes either one of the two states of long wavelength isomer and of short wavelength isomer and quenches the fluorescence emitted from said first photochromic compound.

4. The optical recording medium as claimed in Claim 3, characterized in that said second photochromic compound is spiropyrane.

5. The optical recording medium as claimed in claim 3 or 4, characterized in that said first photochromic compound is spiropyrane.

6. A method for erasing and recording information on an optical recording medium, characterized in that it comprises at least one recording layer containing as essential material a composition which includes
at least a first photochromic compound with fluorescent activity and which takes either one of the two states of colorless isomer and of colored isomer, and
at least one photo-reactive bistable quencher, which is a second photochromic compound, which takes either one of the two states of long wavelength isomer and of short wavelength isomer and quenches the fluorescence emitted from said first photochromic compound,
said photo-reactive bistable quencher being a control agent for controlling the photochromic reactivity of said first photochromic compound,
which method comprises the following steps:
an initial step for initialization of said optical recording medium by irradiating said recording medium with a light at the wavelength in an absorption band of the short wavelength isomer of said photo-reactive bistable quencher included in said recording layer thereby converting said photo-reactive bistable quencher into its long wavelength isomer and activating it as a quencher, and then
irradiating said recording layer with a light at the wavelength in an absorption band of said colorless isomer of said first photochromic compound included in said recording layer thereby converting said colorless isomer of said first photochromic compound into its colored isomer,
a recording step for recording information on said optical recording medium by irradiating with a light at the wavelength in an absorption band of the long wavelength isomer of said photo-reactive bistable quencher thereby inactivating it as a quencher by converting said photo-reactive bistable quencher into is short wavelength isomer, and then
irradiating said recording layer with a light at the wavelength in an absorption band of the colored isomer of said first photochromic compound thereby converting said first photochromic compound into its colorless isomer, and
an erasing step for erasing said recorded information by irradiating said recording medium with a light at the wavelength in an absorption band of the short wavelength isomer of said photo-reactive bistable quencher included in said recording layer thereby converting said photo-reactive bistable quencher into its long wavelength isomer and activating it as a quencher, and then irradiating said recording layer with a light at the wavelength in an absorption band of said colorless isomer of said first photochromic compound included in said recording layer thereby converting said colorless isomer of said first photochromic compound into its colored isomer.

## Patentansprüche

1. Ein optisches Aufzeichnungsmedium, welches mindestens eine Aufzeichnungsschicht umfaßt, die als wesentliches Material eine Zusammensetzung enthält, welche die nachstehenden Komponenten aufweist:
mindestens einen Farbstoff und
mindestens eine photochrome Verbindung,
**dadurch gekennzeichnet**, daß der besagte Farbstoff ein fluoreszierendes Material und die besagte photochrome Verbindung eine photo-reaktive bistabile Löschsubstanz mit Löschwirkung für die durch das besagte fluoreszierende Material emittierte Fluoreszenz ist, wobei die Menge an der besagten photo-reaktiven bistabilen Löschsubstanz in einem Überschuß gegenüber derjenigen Menge vorliegt, welche tatsächlich für das Löschen der betreffenden Fluoreszenz erforderlich ist.

2. Eine Methode zum Löschen von Information, die in einem optischen Aufzeichnungsmedium gespeichert ist, oder zum Initiieren des Startens eines solchen Mediums mit mindestens einer Aufzeichnungsschicht, welche als wesentliches Material eine Zusammensetzung enthält, die die nachstehenden Komponenten aufweist:
mindestens einen Farbstoff und
mindestens eine photochrome Verbindung,
die dadurch gekennzeichnet ist, daß der besagte Farbstoff ein fluoreszierendes Material und die besagte photochrome Verbindung eine photo-reaktive bistabile Löschsubstanz mit Löschwirkung für die durch das besagte fluoreszierende Material emittierte Fluoreszenz ist und die Menge an der besagten photoreaktiven bistabilen Löschsubstanz in einem Überschuß gegenüber derjenigen Menge vorliegt, welche tatsächlich für das Löschen der betreffenden Fluoreszenz erforderlich ist,
welche Methode die folgenden Maßnahmen umfaßt:
das Bestrahlen der besagten Aufzeichnungsschicht mit Licht einer Wellenlänge, welche in einem Absorptionsbereich des farblosen Isomeren der besagten photochromen Verbindung liegt, und Umwandeln eines Anteils der besagten photochromen Verbindung in die farbige isomere Form.

3. Ein optisches Aufzeichnungsmedium, dadurch gekennzeichnet, daß es mindestens eine Aufzeichnungsschicht aufweist, welche als wesentliches Material eine Zusammensetzung enthält, welche mindestens eine photochrome Verbindung mit Fluoreszenzaktivität als erste photochrome Verbindung aufweist, wobei diese entweder in der Form des farblosen Isomers oder als farbiges Isomer vorliegt, und außerdem mindestens eine photoreaktive bistabile Löschsubstanz aufweist, wobei es sich um eine zweite photochrome Verbindung handelt, welche entweder als Isomer im Langwellenbereich oder als Isomer im Kurzwellenbereich vorliegt und welche die von der besagten ersten photochromen Substanz emittierte Fluoreszenz löscht.

4. Optisches Aufzeichnungsmedium nach Anspruch 3, dadurch gekennzeichnet, daß die besagte zweite photochrome Verbindung Spiropyran ist.

5. Optisches Aufzeichnungsmedium nach Anspruch 3 oder 4, dadurch gekennzeichnet, daß die besagte erste photochrome Verbindung Spiropyran ist.

6. Eine Methode zum Löschen und zum Aufzeichnen von Information in einem optischen Aufzeichnungsmedium, welches dadurch gekennzeichnet ist, daß es mindestens eine optische Aufzeichnungsschicht aufweist, welche als wesentliches Material eine Zusammensetzung enthält, die mindestens eine photochrome Verbindung mit Fluoreszenzaktivität als erste polychrome Verbindung aufweist, wobei diese entweder in der Form des farblosen Isomers oder aber als farbiges Isomer vorliegt, und außerdem mindestens eine photo-reaktive bistabile Löschsubstanz aufweist, wobei es sich um um eine zweite photochrome Verbindung handelt, welche entweder als Isomer im Langwellenbereich oder als Isomer im Kurzwellenbereich vorliegt und welche die von der ersten besagten photochromen Substanz emittierte Fluoreszenz löscht, wobei die besagte photoreaktive bistabile Löschsubstanz ein Kontrollmittel für die photochemische Reaktivität der besagten ersten photochromen Verbindung ist;
welche Methode die folgenden Maßnahmen umfaßt:
einen Anfangsschritt zum Initiieren des Startens des besagten optischen Aufzeichnungsmediums durch Bestrahlen des Aufzeichnungsmediums mit Licht einer Wellenlänge, welche in einem Absorptionsbereich des Isomers im Kurzwellenbereich der besagten photo-reaktiven bistabilen Löschsubstanz liegt, welche sich in der besagten Aufzeichungsschicht befindet, und Umwandeln der photo-reaktiven bistabilen Löschsubstanz in das Isomer der Langwellenform sowie Aktivieren der Löschwirkung desselben und anschließend das Bestrahlen der Aufzeichnungsschicht mit Licht einer Wellenlänge, welche in einem Absorptionsbereich des besagten farblosen Isomers der besagten ersten photochromen Verbindung liegt, die sich in der Aufzeichnungsschicht befindet, und Umwandeln des farblosen Isomeren der besagten ersten photochromen Verbindung in die farbige Isomerform,
einen Aufzeichnungsschritt zur Aufzeichnung von Information in dem besagen optischen Aufzeichnungsmedium durch Bestrahlen mit Licht einer Wellenlänge, die im Absorptionsbereich der Langwellen-Isomerform der besagten photo-reaktiven bistabilen Löschsubstanz liegt, und Inaktivieren der Löschwirkung derselben durch Umwandeln der photo-reaktiven bistabilen Löschsubstanz in die kurzwellige Isomerform und anschließendes Bestrahlen der besagten Aufzeichnungsschicht mit Licht einer Wellenlänge, die in einem Absorptionsbereich des farbigen Isomers der besagten ersten photochromen Verbindung liegt, und Umwandeln derselben in die Form des farblosen Isomeren,
einen Löschungsschritt zum Löschen besagter aufgezeichneter Information durch Bestrahlen des besagten Aufzeichnungsmediums mit Licht einer Wellenlänge, die in einem Absorptionsbereich des Isomers in der Kurzwellenform der besagen photo-reaktiven bistabilen Löschsubstanz liegt, welche sich in der Aufzeichnungsschicht befindet, und Umwandeln der besagten photo-reaktiven bistabilen Löschsubstanz in die Isomerform des Langwellenbereiches sowie Aktivieren der Löschwirkung derselben, und anschließend das Bestrahlen der besagten Aufzeichnungsschicht mit Licht einer Wellenlänge, die im Absorptionsbereich des farblosen Isomers der besagten ersten photochromen Verbindung liegt, die sich in der Aufzeichnungsschicht befindet, und Umwandeln des farblosen Isomers der ersten photochromen Verbindung in die farbige Isomerform.

## Revendications

1. Support d'enregistrement optique comprenant au moins une couche d'enregistrement contenant comme matériau essentiel une composition qui comporte :
au moins un colorant et
au moins un composé photochromique,
caractérisée en ce que :
ledit colorant est un matériau fluorescent,
ledit composé photochromique est un agent d'étouffement photo-réactif bistable, pour étouffer la fluorescence émise par ledit matériau fluorescent, et
la quantité dudit agent d'étouffement photo-réactif bistable est supérieure à celle réellement nécessaire pour l'étouffement de ladite fluorescence.

2. Procédé d'effacement d'une information stockée dans ou pour initialiser un support d'enregistrement optique comprenant au moins une couche d'enregistrement contenant comme matériau essentiel une composition qui comporte :
au moins un colorant et
au moins un composé photochromique,
caractérisée en ce que :
ledit colorant est un matériau fluorescent,
ledit composé photochromique est un agent d'étouffement photo-réactif bistable, afin d'étouffer la fluorescence émise par ledit matériau fluorescent, et
la quantité dudit agent d'étouffement photo-réactif bistable est supérieure à celle qui est réellement nécessaire pour l'étouffement de ladite fluorescence,
procédé qui consiste à :
irradier ladite couche d'enregistrement avec une lumière à la longueur d'onde dans une bande d'absorption de l'isomère incolore dudit composé photochromique, et ainsi
convertir une portion dudit composé photochromique pour donner son isomère coloré.

3. Support d'enregistrement optique, caractérisé en ce qu'il comprend au moins une couche d'enregistrement contenant comme matériau essentiel une composition qui comporte :
au moins un composé photochromique avec une activité fluorescente qui est un premier composé photochromique et prend l'un de deux états : isomère incolore et isomère coloré, et
au moins un agent d'étouffement photo-réactif, bistable, qui est un second composé photochromique, et qui prend l'un ou l'autre de deux états : isomère à grande longueur d'onde et isomère à courte longueur d'onde, et étouffe la fluorescence émise par ledit premier composé photochromique.

4. Support d'enregistrement optique selon la revendication 3, caractérisé en ce que ledit second composé photochromique est le spiropyrane.

5. Support d'enregistrement optique selon la revendication 3 ou la revendication 4, caractérisé en ce que ledit premier composé photochromique est le spiropyrane.

6. Procédé pour effacer et enregistrer une information sur un support d'enregistrement optique, caractérisé en ce qu'il comprend au moins une couche d'enregistrement contenant comme matériau essentiel une composition qui comporte :
au moins un premier composé photochromique avec une activité fluorescente et qui prend l'un ou l'autre de deux états : isomère incolore et isomère coloré, et
au moins un agent d'étouffement photo-réactif bistable, qui est un second composé photochromique, qui prend l'un ou l'autre de deux états : isomère à grande longueur d'onde et isomère à courte longueur d'onde et étouffe la fluorescence émise par ledit premier composé photochromique,
ledit agent d'étouffement photo-réactif bistable étant un agent de contrôle afin de contrôler la réactivité photochromique dudit premier composé photochromique,
procédé qui comprend les étapes suivantes :
une étape initiale pour l'initialisation dudit support d'enregistrement optique en irradiant ledit support d'enregistrement avec une lumière à la longueur d'onde dans une bande d'absorption de l'isomère à courte longueur d'onde dudit agent d'étouffement photo-réactif bistable inclus dans ladite couche d'enregistrement, d'où la conversion dudit agent d'étouffement photo-réactif bistable en son isomère à grande longueur d'onde et son activation comme agent d'étouffement, et ensuite
l'irradiation de ladite couche d'enregistrement avec une lumière à la longueur d'onde dans une bande d'absorption dudit isomère incolore dudit premier composé photochromique inclus dans ladite couche d'enregistrement, d'où la conversion dudit isomère incolore dudit premier composé photochromique en son isomère coloré,
une étape d'enregistrement afin d'enregistrer une information sur ledit support d'enregistrement optique par irradiation avec une lumière à la longueur d'onde dans une bande d'absorption de l'isomère à grande longueur d'onde dudit agent d'étouffement photo-réactif bistable, d'où son inactivation comme agent d'étouffement par conversion dudit agent d'étouffement photo-réactif bistable en son isomère à courte longueur d'onde, et ensuite :
l'irradiation de ladite couche d'enregistrement avec une lumière à la longueur d'onde dans une bande d'absorption de l'isomère coloré dudit premier composé photochromique, d'où la conversion dudit premier composé photochromique en son isomère incolore, et
une étape d'effacement afin d'effacer ladite information enregistrée par irradiation dudit support d'enregistrement avec une lumière à la longueur d'onde dans une bande d'absorption de l'isomère à courte longueur d'onde dudit agent d'étouffement photo-réactif bistable inclus dans ladite couche d'enregistrement, d'où la conversion dudit agent d'étouffement photo-réactif bistable en son isomère à grande longueur d'onde et son activation comme agent d'étouffement, et ensuite l'irradiation de ladite couche d'enregistrement avec une lumière à la longueur d'onde dans une bande d'absorption dudit isomère incolore dudit premier composé photochromique inclus dans ladite couche d'enregistrement, d'où la conversion dudit isomère incolore dudit premier composé photochromique en son isomère coloré.
